# EUROPÄISCHE PATENTSCHRIFT

(11) **EP 0 355 130 B1**
(45) Veröffentlichungstag und Bekanntmachung des Hinweises auf die Patenterteilung: **04.05.1994**
(21) Anmeldenummer: 88910019.4
(22) Anmeldetag: 15.11.1988
(51) Int. Cl.: G03B 23/02

(54) **AUFBEWAHRUNGSBEHÄLTER FÜR EINEN BLATTSTAPEL**
STORAGE CONTAINER FOR A PILE OF SHEETS
RECIPIENT DE STOCKAGE D'UNE PILE DE FEUILLES

(30) Priorität: 21.11.1987 DE 3739498
(43) Veröffentlichungstag der Anmeldung: 28.02.1990
(73) Patentinhaber: Licinvest AG, CH-7002 Chur (CH)
(72) Erfinder: ACKERET, Peter, CH-8700 Küsnacht (CH)
(74) Vertreter: Sparing - Röhl - Henseler Patentanwälte
(86) Internationale Anmeldenummer: EP8801040
(87) Internationale Veröffentlichungsnummer: WO8904990

(56) Entgegenhaltungen:
- WO-A-86/03026
- DE-A- 2 912 643

## Beschreibung

Die Erfindung betrifft einen Aufbewahrungsbehälter für einen Blattstapel, insbesondere einen solchen, bei dem durch Hinundherverschieben zweier Rahmenteile relativ zueinander der von ihnen aufgenommene Blattstapel zyklisch umgeschichtet werden kann; allerdings ist die Erfindung nicht auf diesen Anwendungsfall beschränkt. Trotzdem soll im folgenden, der Einfachheit wegen, von einem "Blattwechsler" gesprochen werden. Bei den Blättern kann es sich beispielsweise um gleichformatige Fotoabzüge handeln.

Ein Blattwechsler oder Aufbewahrungsbehälter mit den Merkmalen, die im Oberbegriff des Patentansprüches 1 angegeben sind, ist aus der Druckschrift EP 0203155 bekannt, sowie aus den Publikationen WO 86/03018, WO 86/03019, WO 86/03022, WO 86/03026, WO 86/03028, WO 86/03029, WO 86/03030. Der bekannte Blattwechsler besteht aus einem zweischaligen Gehäuse und einem Schieber, der parallel zu der Ebene eines in die Gehäuseoberschale eingesetzten Fensters aus dem Gehäuse heraus- und wieder einschiebbar ist. Bei jeder vollständigen Hinundherbewegung des Schiebers erfolgt der Transfer eines Blattes von einem zum andern Stapelende, so daß nach jedem solchen Zyklus ein anderes Blatt unter dem Fenster präsentiert wird.

Die Trennebene zwischen der Ober- und der Unterschale des Gehäuses liegt etwa in der Mitte zwischen Vorder- und Rückseite des Behälters. Ober- und Unterschale weisen je einen Ausschnitt auf, in den ein Griffstück des Schiebers einspringt.

Diese Gestaltung bringt ästhetische und fertigungsmäßige Nachteile mit sich:
Der Schiebergriff, der in den das Sichtfenster umgebenden "Passepartout"-Rahmen der Oberschale einspringt, ist gegen diesen durch eine unvermeidliche Trennlinie abgesetzt, die diese Schauseite des Behälters verunziert, was insbesondere dann stört, wenn der Behälter als Hänge- oder Aufstellrahmen Verwendung findet. Um dies wenigstens etwas zu kaschieren, sind die Oberschale und der mit ihr bündige Teil des Schiebers mit dem gleichen Dekor zu versehen. Will der Hersteller mehrere unterschiedliche Dekors anbieten, müssen deshalb mehrere Bauteile entsprechender Ausführung produziert, gelagert und zusammengeführt werden. Dies macht die Fertigungslogistik aufwendig.

Ebenso wie der Schieber, sind auch Ober- und Unterschale des Gehäuses Kunststoffspritzteile, die natürlich entformbar sein müssen.Deshalb hat der Behälter seine maximalen Außenabmessungen im Bereich der Trennebene zwischen beiden Schalen, und erst ab dieser Trennebene können sich die Schalen nach oben bzw. unten verjüngen. Deshalb wirkt der Behälter bei Betrachtung von vorn verhältnismäßig dick.

Aufgabe der Erfindung ist es, den Behälter so zu gestalten, daß er ästhetisch befriedigt und zugleich die Logistik bei seiner Fertigung vereinfacht wird, auch wenn eine Vielzahl unterschiedlicher Dekors verwendet wird.

Die Lösung gemäß der Erfindung besteht darin, daß die Schauseite des Behälters das Aussehen eines üblichen Bilderrahmens erhält, wofür die in Patentanspruch 1 genannten Merkmale vorgesehen sind.

Ausgehend von der fensternahen Trennebene kann die Unterschale des Gehäuses mit einer sich stark verjüngenden Kontur ausgebildet werden, und so wirkt der Behälter optisch schlank, da diese rückwärtigen Teile in einem großen Raumwinkel, von vorn gesehen, gar nicht mehr erkennbar sind oder doch stark verkürzt wirken.

Ferner ist es nicht mehr erforderlich, das Dekor von Oberschale und Schieber aufeinander abzustimmen. Vielmehr können Unterschale und Schieber in einheitlicher möglichst neutraler Färbung, etwa anthrazit, gefertigt und mit Oberschalen beliebigen Dekors kombiniert werden, da von der "Schauseite" aus praktisch nur die Oberschale wahrgenommen wird.

In einer bevorzugten Ausführungsform ist vorgesehen, daß der Schieber eine mit den umgebenden Gehäusewandungen kongruente Frontwand sowie Stapelanschläge aufweist, die die Stapelkanten von der Frontwand distanzieren, und daß in dem Bereich zwischen Frontwand und Stapelanschlägen der Schieber eine von der Frontwand verdeckte Griffmulde aufweist, die in einen Ausschnitt in einem Gehäusebodenteil gegenüber der Oberseite eingepaßt ist, von der Unterseite her zugänglich ist und gegen das Gehäuseinnere durch Wandungen abgesetzt ist.

Die von unten einspringende Griffmulde des Schiebers ist für den Benutzer ergonomisch günstiger als der Schiebergriff des bekannten Behälters, der von oben und unten zu erfassen ist.

In der bevorzugten Ausführungsform ist die Unterschale noch durch eine Schulter gegen ihren Boden abgesetzt, der dann steil eingezogen ist; durch diese Form wird der Behälter optisch noch schlanker erscheinen, obwohl er beispielsweise bis zu vierzig Fotoabzüge als Stapel aufnehmen kann.

Die Unteransprüche definieren bevorzugte und zweckmäßige Ausgestaltungen der Erfindung.

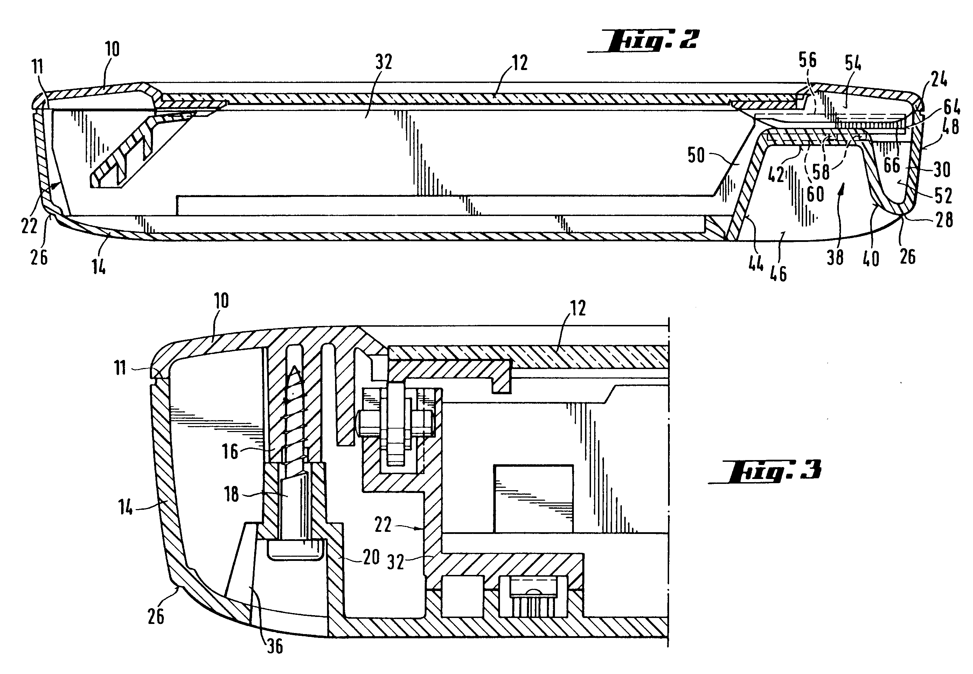

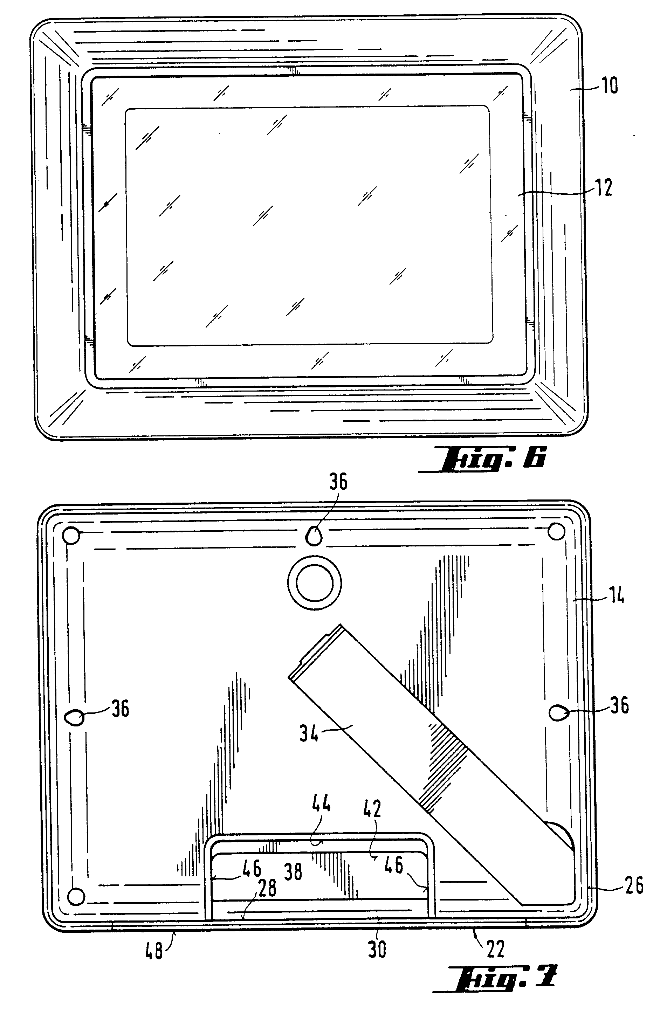

Ein bevorzugtes Ausführungsbeispiel der Erfindung ist in den beigefügten Zeichnungen dargestellt und wird nachstehend im einzelnen erläutert.
Fig. 1 stellt einen Blattwechsler gemäß der Erfindung perspektivisch dar, wobei der Schieber herausgezogen ist,
Fig. 2 ist ein Schnitt in der zur Schieberbewegungsrichtung parallelen Mittelebene,
Fig. 3 zeigt einen Teilschnitt senkrecht zu dem nach Fig. 2 in Höhe einer der Aufhängeösen,
Fig. 4 ist eine Seitenansicht auf die Schieberfront bei geschlossenem Wechsler,
Fig. 5 ist eine Seitenansicht in Richtung des Pfeils "5" in Fig. 4,
Fig. 6 ist eine Draufsicht auf die Vorderseite des Wechslers, und
Fig. 7 ist eine Draufsicht auf seine Rückseite.
Wie am besten in Fig. 2 und 3 erkennbar, besteht das Gehäuse aus einer Oberschale 10, einer in diese eingesetzten transparenten Scheibe 12 und einer Unterschale 14. Die Scheibe 12 ist in die Oberschale eingeschnappt, und die Unterschale ist mit der Oberschale nahe der Außenkontur beider an mehreren Stellen (Fig. 7) verschraubt; hierfür sind an die Innenseite der Oberschale Fortsätze 16 angespritzt, in die Verbindungsschrauben 18 eingefügt sind; diese sitzen versenkt in entsprechenden inneren Fortsätzen 20 der Unterschale. Es versteht sich, daß Ober- und Unterschale auch in anderer Weise miteinander verbunden sein können, etwa durch Zusammenschnappen, Verkleben usw. In einer Richtung parallel zur Ebene der Scheibe 12 ist ein Schieber 22 bis zu einem Anschlag aus dem Gehäuse herausziehbar und wieder einschiebbar, und bei jeder solchen Hinundherbewegung wird ein Blatt eines im Schieber liegenden Stapels an einem Stapelende abgezogen und am andern Stapelende wieder zugefügt. Hinsichtlich der Einzelheiten dieser Umschichtfunktion kann auf die eingangs genannten Druckschriften verwiesen werden.

Die Trennebene 11 zwischen Oberschale 10 und Unterschale 14 liegt auf dem Niveau der geraden, durchgehenden frontseitigen Oberkante 24 des Schiebers 22. Von dieser Ebene ausgehend, verjüngt sich die Unterschale bis zu einer Schulter 26, und etwa auf demselben Niveau liegt auch die Unterkante 28 des Schiebergriffes 30. Auch die Unterseite der Schieberholme 32 befindet sich etwa auf diesem Niveau. Die Kontur der Schieberfront ist bündig mit der der Unterschale. Jenseits der Schulter 26 ist die Unterschale stark eingezogen. Im Ergebnis sieht der Blattwechsler in der Draufsicht (Fig. 6) wie ein gewöhnlicher Bilderrahmen aus, und er vermag diese Funktion ebenfalls zu erfüllen, da er mittels des ausklappbaren Aufstellfußes 34 (Fig. 7; in Figur 2 nicht mit dargestellt) aufstellbar und mittels der in die Unterschale eingeformten Ösen 36 aufhängbar ist. Obwohl der Blattwechsler beispielsweise bis zu vierzig Fotoabzüge aufnehmen und wechseln kann und eine entsprechende Dicke aufweisen muß, wirkt er optisch schlank, da die Teile der Unterschale jenseits der Schulter 26 in einem Raumwinkel von etwa 120° bei der Ansicht auf das Sichtfenster verdeckt sind. Ebenso ist die Griffmulde 38 des Schiebers verdeckt.

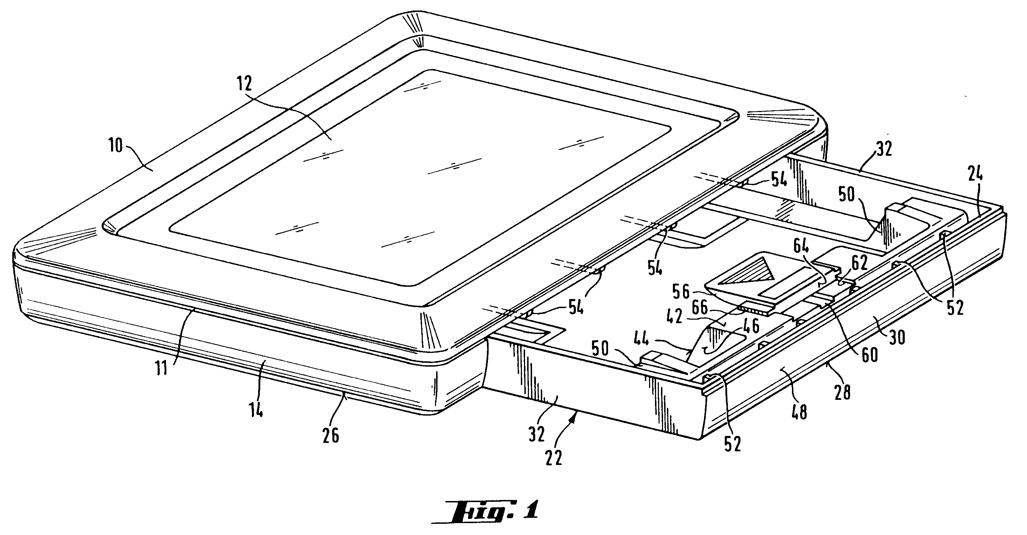

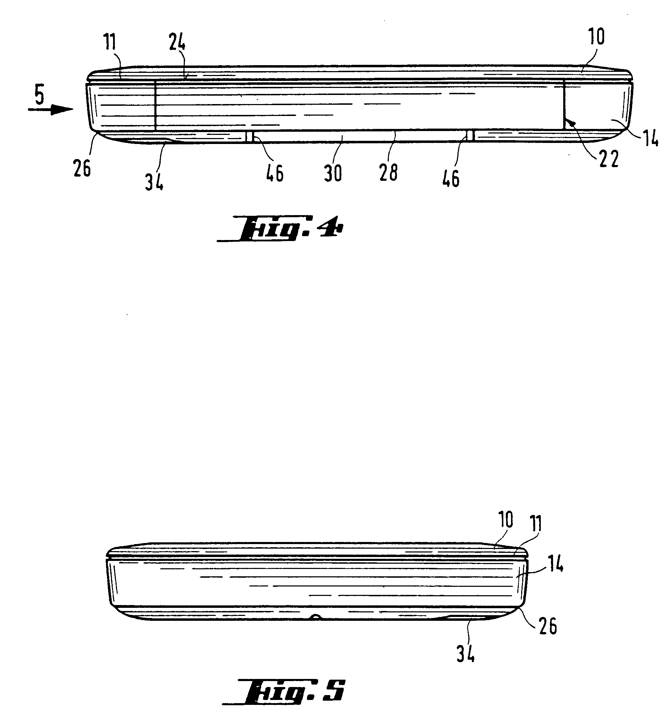

Eine solche Griffmulde ist in der Tat bevorzugt,da ja der Schieber 22 nicht von oben zugänglich ist und deshalb nicht zwischen zwei Fingern gefaßt werden kann, so daß man mit einem oder mehreren Fingern von unten in die Griffmulde eingreifen muß, um den Schieber zu betätigen. Besonders in Fig. 2 ist die Kontur dieser Mulde erkennbar: Von der frontseitigen Unterkante 28 erstreckt sich eine abgerundete Partie 40 nach oben (das heißt, in Richtung der Scheibe 12), und diese Partie geht dann über in ein etwa scheibenparalleles Dach 42, von dem eine innere Schrägwand 44 sich in Richtung Gehäuseboden erstreckt. Aus Fig. 1 in Verbindung mit Fig. 2 ergibt sich, daß die Griffmulde 38 allseitig geschlossen ist, da senkrecht zum Dach 42 und parallel zur Schieberbewegungsrichtung noch Seitenwände 46 angeformt sind. Die Schieberfront 48 ist durchgehend über die ganze Breite des Schiebers glatt und hinsichtlich der Oberfläche (Form, Struktur, Farbe) identisch mit den anschließenden Abschnitten der Unterschale 14 des Gehäuses, so daß die Begrenzungslinien des Schiebers in der Seitenansicht (Fig. 4) kaum auffallen.

Beidseits der Seitenwände 46 setzt sich die abgerundete Partie 40 fort bis zu seitlichen Stapelanschlagblöcken 50, die ihrerseits an der Unterseite hohl sind. Der Spalt zwischen Schieberfront 48 und Partie 40 ist durch angeformte Innenstücke 52 ausgesteift. Der Fachmann erkennt, daß ein so gestalteter Schieber sich ohne komplizierte Werkzeuge aus Kunststoff spritzen und gut entformen läßt.

Obwohl nicht zwingend, ist es doch bevorzugt, den Griff symmetrisch bezüglich der Schieberbreite anzuordnen und ihm einen Querschnitt in U-Form oder, wie im Ausführungsbeispielt, leicht asymmetrischer V-Form zu geben.

An die Innenseite der Gehäuseoberschale 10 sind sich parallel zur Schieberbewegungsrichtung erstreckende Rippen 54 angeformt, die den eingelegten Stapel im Abstand von der Scheibe 12 halten. Die Oberseite des Daches 42 ist so niedrig, daß sie unter diese Rippen paßt. Auf dem Dach sitzt jedoch noch ein Stapelniederhalter 56, der bei eingeschobenem Schieber zwischen zwei Rippen 54 ragt und beim Einschub durch Auflaufen auf einen Anschlag zurückgedrückt wird entgegen der Vorspannung einer Feder, die ihn bei gezogenem Schieber über die Kanten des vom Schieber mitgenommenen Blattstapels verlagert, so daß dieser nicht herausfallen kann. Der Niederhalter hat die Form eines flachen, nach unten offenen Kastens und ist mit zwei nach unten ragenden Stiften 58 in einer in die Oberseite des Daches 42 eingesenkten Nut 60 geführt. Seitlich der Nut befinden sich Schwalbenschwanzführungen 62, die das Herausfallen des Niederhalters verhindern. Die Vorspannfeder ist eine Schenkelhalsfeder, die mit ihrem Wickel auf einem der Stifte 58 sitzt und sich mit ihren Armen symmetrisch an einer, hinter der Außenkante 64 des Niederhalters liegenden Anschlagleiste -- angeformt an das Dach 42 -- abstützt. Riffelleisten 66 an den Seiten des Niederhalters erlauben, ihn von Hand gegen die Federkraft zurückzuschieben, so daß ein Stapel eingelegt oder entnommen werden kann.

Zwischen den Griffseitenwänden 46 und den Stapelanschlagblöcken 50 befindet sich beidseits des Griffs ein Freiraum, in den sich bei eingeschobenem Schieber quer zur Scheibe 12 beweglich Federarme erstrecken und die bei gezogenem Schieber ermöglichen, in den Schieber hineinzufassen und den Stapel zu umgreifen.

## Patentansprüche

1. Aufbewahrungsbehälter für einen Blattstapel mit einem Gehäuse, bestehend aus einer mit einer Sichtscheibe (12) zum Präsentieren des obersten Blattes versehenen Oberschale (10) und einer Unterschale (14), die mit der Oberschale in einer Trennebene zusammenstößt, und mit einem Schieber (22), der parallel zu der Sichtscheibenebene aus dem Gehäuse durch eine Gehäuseöffnung herausziehbar ist und wieder einschiebbar ist sowie eine Frontwand (48) aufweist, die bei eingeschobenem Schieber die Gehäuseöffnung verschließt, dadurch gekennzeichnet, daß die Trennebene (11) zwischen Oberschale (10) und Unterschale (14) im wesentlichen zusammenfällt mit der der Oberschale zugekehrten Frontwandkante des Schiebers, der in seiner eingeschobenen Position von der Oberschale verdeckt ist.

2. Aufbewahrungsbehälter nach Anspruch 1, dadurch gekennzeichnet, daß der Schieber (22) eine mit den umgebenden Gehäusewandungen kongruente Frontwand sowie Stapelanschläge aufweist, die die Stapelkanten von der Frontwand distanzieren, und daß in dem Bereich zwischen Frontwand und Stapelanschlägen der Schieber eine von der Frontwand verdeckte Griffmulde (38) aufweist, die in einen Ausschnitt in einem Gehäusebodenteil gegenüber der Oberseite eingepaßt ist, von der Unterseite her zugänglich ist und gegen das Gehäuseinnere durch Wandungen abgesetzt ist.

3. Behälter nach Anspruch 1, dadurch gekennzeichnet, daß sich die Kontur der Unterschale, ausgehend von der Trennebene (11), zu einem Gehäuseboden hin optisch wahrnehmbar verjüngt.

4. Behälter nach einem der Ansprüche 1 bis 3, dadurch gekennzeichnet, daß die Kontur der Unterschale gegen den Gehäuseboden durch eine Schulter (26) abgesetzt ist.

5. Behälter nach Anspruch 4, gekennzeichnet durch einen abgerundeten Übergang zwischen der Schulter (26) und den Gehäuseboden.

6. Behälter nach Anspruch 4, dadurch gekennzeichnet, daß die Schieberfrontwand eine Unterkante (28) gegenüber der Oberkante (24) aufweist, welche Unterkante mindestens annähernd in der von der Gehäuseschulter (26) definierten Ebene liegt.

7. Behälter nach Anspruch 1, dadurch gekennzeichnet, daß sich die Kontur der Oberschale, ausgehend von der Trennebene (11), zu einer Behälteroberseite hin optisch wahrnehmbar verjüngt.

8. Behälter nach Anspruch 4, bei dem der Schieber (22) den Blattstapel tragende und sich parallel zu seiner Bewegungsrichtung erstreckende Längsholme (32) aufweist, dadurch gekennzeichnet, daß die dem Blattstapel abgewandte Unterseite der Längsholme etwa in der durch die Gehäuseschulter (26) definierten Ebene liegt.

9. Behälter nach einem der vorangehenden Ansprüche, dadurch gekennzeichnet, daß der Schieber (22) und die Unterschale (14) aus gleichartigem Kunststoff gespritzt sind.

10. Behälter nach Anspruch 1, dadurch gekennzeichnet, daß die Schieberfrontwand (48) über die Gesamtbreite des Schiebers (22) eine geschlossene Fläche mit einer der Unterschalenkontur gleichen Kontur aufweist.

11. Behälter nach Anspruch 7, dadurch gekennzeichnet, daß die Kontur der Oberschale sich von der Trennebene ausgehend progressiv zunehmend verjüngt.

12. Behälter nach Anspruch 1, dadurch gekennzeichnet, daß der Schieber (22) eine Griffmulde (38) aufweist, die auf der der Oberschale abgekehrten Seite des Schiebers vorgesehen ist.

13. Behälter nach Anspruch 12, dadurch gekennzeichnet, daß sich die Griffmulde (38) an die Frontwand anschließt.

14. Behälter nach Anspruch 12 oder 13, dadurch gekennzeichnet, daß die Griffmulde (38) mittig bezüglich der Schieberfrontwand (48) angeordnet ist.

15. Behälter nach Anspruch 12, dadurch gekennzeichnet, daß die Griffmulde (38) in einen von der Gehäuseöffnung her einspringenden Ausschnitt der Unterschale eingepaßt ist und gegen das Gehäuseinnere durch Wandungen abgesetzt ist.

16. Behälter nach Anspruch 12, dadurch gekennzeichnet, daß die Unterkante (28) der Schieberfrontwand (48) über eine abgerundete Partie (40) in die Griffmulde (38) übergeht.

17. Behälter nach Anspruch 16, dadurch gekennzeichnet, daß die Frontwand (48) und die abgerundete Partie (40) gemeinsam einen etwa V-förmigen Querschnitt definieren.

18. Behälter nach Anspruch 17, dadurch gekennzeichnet, daß zwischen der Frontwand (48) und der abgerundeten Partie (40) ein von oben zugänglicher Hohlraum ausgebildet ist.

19. Behälter nach Anspruch 18, dadurch gekennzeichnet, daß sich der Hohlraum über die gesamte Breite der Schieberfrontwand (48) erstreckt.

20. Behälter nach Anspruch 18 oder 19, dadurch gekennzeichnet, daß der Hohlraum durch angeformte Einsatzstücke (52) ausgesteift ist.

21. Behälter nach Anspruch 17, dadurch gekennzeichnet, daß Schieberfrontwand (48) und abgerundete Partie (40) gemeinsam einen asymmetrischen V-förmigen Querschnitt definieren.

22. Behälter nach Anspruch 15, dadurch gekennzeichnet, daß auf der der Schieberfrontwand abgewandten Seite der Griffmulde eine Wandung (44) vorgesehen ist, die sich bis zum Gehäusebodenteil erstreckt.

23. Behälter nach Anspruch 22, dadurch gekennzeichnet, daß die Griffmulde seitlich von zwei Seitenwänden (46) begrenzt ist, die sich von der Wandung (44) in Richtung Schieberfrontwand (48) erstrecken.

24. Behälter nach Anspruch 15, dadurch gekennzeichnet, daß die Griffmulde auf ihrer der Oberseite des Gehäuses zugekehrten Seite ein im wesentlichen ebenes, zu dessen Sichtfenster (12) paralleles Dach (42) aufweist.

25. Behälter nach Anspruch 24, bei dem an die dem Schieber zugekehrte Innenseite des Gehäuses Rippen (54) angeformt sind, dadurch gekennzeichnet, daß die Dachoberseite unter die Rippen (54) paßt.

26. Behälter nach Anspruch 24, dadurch gekennzeichnet, daß der Schieber einen Stapelniederhalter (56) aufweist, der in der Schieberbewegungsrichtung gleitbeweglich auf dem Dach (42) angeordnet ist.

27. Behälter nach Anspruch 26, dadurch gekennzeichnet, daß das Dach (42) eine Führungsnut (60) für an den Niederhalter angeformte Zapfen (58) aufweist.

28. Behälter nach Anspruch 27, dadurch gekennzeichnet, daß der Niederhalter von einer Schenkelhalsfeder in eine einen eingelegten Stapel übergreifende Position vorgespannt ist, und daß die Feder mit ihrem Wickel auf einem der Zapfen (58) sitzt und sich mit ihren beiden Armen an einer Anschlagseite abstützt, die an das Dach (42) angeformt ist.

29. Behälter nach Anspruch 1, dadurch gekennzeichnet, daß der Schieber Stapelanschläge (50) zum Distanzieren des Stapels von der Schieberfrontwand (48) aufweist.

30. Behälter nach Anspruch 29, dadurch gekennzeichnet, daß die Stapelanschläge nahe Seitenholmen (32) des Schiebers angeordnet sind.

31. Behälter nach Anspruch 29, dadurch gekennzeichnet, daß die Griffmulde zwischen den Stapelanschlägen und der Schieberfrontwand angeordnet ist.

32. Behälter nach Anspruch 29, dadurch gekennzeichnet, daß die Sichtscheibe (12) von passepartout-artigen Flächenabschnitten der Oberschale (10) umgeben ist, welche bei eingeschobenem Schieber (22) den Raum zwischen den Stapelanschlägen und der Schieberfrontwand abdecken.

33. Behälter nach Anspruch 32, dadurch gekennzeichnet, daß die Stapelanschläge bei eingeschobenem Schieber (22) in etwa mit der zur Schieberfrontwand parallelen inneren Passepartout-Kante kongruent sind.

34. Behälter nach Anspruch 23 und 30, dadurch gekennzeichnet, daß zwischen den Seitenwänden (46) der Griffmulde (38) und den Seitenholmen (32) des Schiebers (22) ein Freiraum vorgesehen ist.

35. Behälter nach Anspruch 34, dadurch gekennzeichnet, daß der Freiraum durchgehend über die gesamte Schieberhöhe vorgesehen ist.

36. Behälter nach Anspruch 22, dadurch gekennzeichnet, daß die Wandung (44) sich schräg abwärts erstreckt.

37. Behälter nach Anspruch 1, dadurch gekennzeichnet, daß er Mittel zum zyklischen Umschichten des Stapels aufweist.

## Claims

1. Storage container for a pile of sheets having a housing, consisting of an upper shell (10) provided with a viewing pane (12) for presentation of the uppermost sheet, and a lower shell (14) which meets the upper shell in a plane of separation, and having a slider member (22) which is able to be pulled out of the housing parallel to the plane of the viewing pane through a housing opening and reinserted, and which has a front wall (48) which closes the housing opening when the slider member is inserted, characterised in that the plane of separation (11) between the upper shell (10 and the lower shell (14) substantially coincides with the front wall edge, facing towards the upper shell, of the slider member, which in its inserted position is covered by the upper shell.

2. Storage container according to Claim 1, characterised in that the slider member (22) has a front wall congruent with the surrounding housing walls and also pile stop members which space the pile edges from the front wall, and that in the region between the front wall and the pile stop members the slider member has a grip recess (38) which is hidden by the front wall and which is fitted into a cut-away portion in a housing base part opposite the upper side, is accessible from the underside and is set back towards the inside of the housing by means of walls.

3. Container according to Claim 1, characterised in that the contour of the lower shell, starting from the plane of separation (11), tapers in a visually perceptible manner towards a housing base.

4. Container according to one of Claims 1 to 3, characterised in that the contour of the lower shell is set back towards the housing base by means of a shoulder (26).

5. Container according to Claim 4, characterised by a rounded-off transition between the shoulder (26) and the housing base.

6. Container according to Claim 4, characterised in that the front wall of the slider member has a lower edge (28) opposite the upper edge (24), which lower edge lies at least approximately in the plane defined by the housing shoulder (26).

7. Container according to Claim 1, characterised in that the contour of the upper shell, starting from the plane of separation (11), tapers in a visually perceptible manner towards an upper side of the container.

8. Container according to Claim 4, wherein the slider member (22) has longitudinal members (32) carrying the pile of sheets and extending parallel to its direction of movement, characterised in that the underside, remote from the pile of sheets, of the longitudinal members lies approximately in the plane defined by the housing shoulder (26).

9. Container according to one of the preceding Claims, characterised in that the slider member (22) and the lower shell (14) are injection-moulded from the same type of plastics material.

10. Container according to Claim 1, characterised in that the slider member front wall (48) has over the entire width of the slider member (22) a closed surface with a contour which is the same as the lower shell contour.

11. Container according to Claim 7, characterised in that the contour of the upper shell progressively tapers increasingly starting from the plane of separation.

12. Container according to Claim 1, characterised in that the slider member (22) has a grip recess (38) which is provided on the side, remote from the upper shell, of the slider member.

13. Container according to Claim 12, characterised in that the grip recess (38) adjoins the front wall.

14. Container according to Claim 12 or 13, characterised in that the grip recess (38) is arranged centrally with respect to the slider member front wall (48).

15. Container according to Claim 12, characterised in that the grip recess (38) is fitted into a cut-away portion of the lower shell extending inwards from the housing opening, and is set back towards the inside of the housing by means of walls.

16. Container according to Claim 12, characterised in that the lower edge (28) of the slider member front wall (48) merges into the grip recess (38) by way of a rounded-off portion (40).

17. Container according to Claim 16, characterised in that the front wall (48) and the rounded-off portion (40) together define an approximately V-shaped cross-section.

18. Container according to Claim 17, characterised in that between the front wall (48) and the rounded-off portion (40) a cavity accessible from above is formed.

19. Container according to Claim 18, characterised in that the cavity extends over the entire width of the slider member front wall (48).

20. Container according to Claim 18 or 19, characterised in that the cavity is stiffened by means of integrally moulded-on insert pieces (52).

21. Container according to Claim 17, characterised in that the slider member front wall (48) and the rounded-off portion (40) together define an asymmetrical V-shaped cross-section.

22. Container according to Claim 15, characterised in that on the side, remote from the slider member front wall, of the grip recess a wall (44) is provided which extends as far as the housing base part.

23. Container according to Claim 22, characterised in that the grip recess is bounded laterally by two side walls (46) which extend from the wall (44) in the direction of the slider member front wall (48).

24. Container according to Claim 15, characterised in that the grip recess has on its side facing towards the upper side of the housing a substantially flat roof (42) parallel to the viewing window (12) thereof.

25. Container according to Claim 24, wherein ribs (54) are integrally moulded onto the inside, facing towards the slider member, of the housing, characterised in that the upper side of the roof fits beneath the ribs (54).

26. Container according to Claim 24, characterised in that the slider member has a pile-depressing means (56) which is arranged on the roof (42) so as to be slidably movable in the direction of movement of the slider member.

27. Container according to Claim 26, characterised in that the roof (42) has a guide groove (60) for pins (58) integrally moulded onto the depressing means.

28. Container according to Claim 27, characterised in that the depressing means is biased by a torsion spring, with projecting ends, into a position engaging over an inserted pile, and in that the spring fits with its coil on one of the pins (58) and bears with both its arms against a stop side which is integrally moulded onto the roof (42).

29. Container according to Claim 1, characterised in that the slider member has pile stop members (50) to space the pile from the slider member front wall (48).

30. Container according to Claim 29, characterised in that the pile stop members are arranged near lateral members (32) of the slider member.

31. Container according to Claim 29, characterised in that the grip recess is arranged between the pile stop members and the slider member front wall.

32. Container according to Claim 29, characterised in that the viewing pane (12) is surrounded by picture frame-like surface sections of the upper shell (10), which when the slider member (22) is inserted cover over the space between the pile stop members and the slider member front wall.

33. Container according to Claim 32, characterised in that when the slider member (22) is inserted, the pile stop members are approximately congruent with the inner picture frame edge parallel to the slider member front wall.

34. Container according to Claims 23 and 30, characterised in that between the side walls (46) of the grip recess (38) and the lateral members (32) of the slider member (22) a free space is provided.

35. Container according to Claim 34, characterised in that the free space is provided continuously over the entire height of the slider member.

36. Container according to Claim 22, characterised in that the wall (44) extends obliquely downwards.

37. Container according to Claim 1, characterised in that it has means for cyclic rearrangement of the pile.

## Revendications

1. Récipient de stockage pour une pile de feuilles, comportant un boîtier constitué d'une coque supérieure (10) pourvue d'une vitre d'observation (12) destinée à la présentation de la feuille supérieure, et d'une coque inférieure (14) qui est jointive à la coque supérieure dans un plan de joint, le récipient comportant également un tiroir (22) qui peut être extrait du boîtier et réintroduit dans le boîtier, au travers d'une ouverture du boîtier, parallèlement au plan de la vitre d'observation, et qui comporte une paroi frontale (48) fermant l'ouverture de boîtier lorsque le tiroir a été introduit, caractérisé en ce que le plan de joint (11) entre la coque supérieure (10) et la coque inférieure (12) se confond sensiblement avec le bord de la paroi frontale du tiroir, dirigé vers la coque supérieure, le tiroir, dans sa position rentrée, étant masqué par la coque supérieure.

2. Récipient de stockage selon la revendication 1, caractérisé en ce que le tiroir (22) présente une paroi frontale coïncident avec les parois du boîtier avoisinantes, ainsi que des butées de pile qui espacent les bords de la pile de la paroi frontale, et en ce que dans la zone située entre la paroi frontale et les butées de pile, le tiroir comporte une cavité de préhension (38) qui est masquée par la paroi frontale, qui est emboîtée dans une découpe dans une partie de base du boîtier, à l'opposé du côté supérieur, qui est accessible par le côté inférieur, et qui est délimitée par des parois par rapport à l'intérieur du boîtier.

3. Récipient selon la revendication 1, caractérisé en ce que le contour de la coque inférieure se rétrécit à partir du plan de joint (11) vers une base du boîtier, de manière perceptible à l'oeil.

4. Récipient selon l'une des revendications 1 à 3, caractérisé en ce que le contour de la coque inférieure est décalé par rapport à la base du boîtier, par un épaulement (26).

5. Récipient selon la revendication 4, caractérisé par une transition arrondie entre l'épaulement (26) et la base du boîtier.

6. Récipient selon la revendication 4, caractérisé en ce que la paroi frontale du tiroir présente un bord inférieur (28) à l'opposé du bord supérieur (24), ce bord inférieur étant situé, tout au moins approximativement dans le plan défini par l'épaulement (26) du boîtier.

7. Récipient selon la revendication 1, caractérisé en ce que le contour de la coque supérieure se rétrécit à partir du plan de joint (11) vers un côté supérieur du récipient, de manière perceptible à l'oeil.

8. Récipient selon la revendication 4, dans lequel le tiroir (22) comporte des longerons (32) portant la pile de feuilles et s'étendant parallèlement à sa direction de déplacement, caractérisé en ce que le côté inférieur des longerons, éloigné de la pile de feuilles, se situe environ dans le plan défini par l'épaulement (26) du boîtier.

9. Récipient selon l'une des revendications précédentes, caractérisé en ce que le tiroir (22) et la coque inférieure (14) sont moulés par injection, en une matière plastique similaire.

10. Récipient selon la revendication 1, caractérisé en ce que la paroi frontale (48) du tiroir présente, sur la totalité de la largeur du tiroir (22), une surface fermée présentant un contour identique au contour de la coque inférieure.

11. Récipient selon la revendication 7, caractérisé en ce que le contour de la coque supérieure se rétrécit progressivement de manière croissante, à partir du plan de joint.

12. Récipient selon la revendication 1, caractérisé en ce que le tiroir (22) comporte une cavité de préhension (38) qui est prévue sur le côté du tiroir, situé à l'opposé de celui dirigé vers la coque supérieure.

13. Récipient selon la revendication 12, caractérisé en ce que la cavité de préhension (38) se raccorde à la paroi frontale.

14. Récipient selon la revendication 12 ou 13, caractérisé en ce que la cavité de préhension (38) est disposée de manière centrale par rapport à la paroi frontale (48) du tiroir.

15. Récipient selon la revendication 12, caractérisé en ce que la cavité de préhension (38) s'emboîte dans une découpe de la coque inférieure, s'engageant à l'intérieur à partir de l'ouverture du boîtier, et est délimitée par des parois par rapport à l'intérieur du boîtier.

16. Récipient selon la revendication 12, caractérisé en ce que le bord inférieur (28) de la paroi frontale (48) du tiroir, se raccorde par une partie arrondie (40), à la cavité de préhension (38).

17. Récipient selon la revendication 16, caractérisé en ce que la paroi frontale (48) et la partie arrondie (40) définissent en commun, une section transversale sensiblement en forme de "V".

18. Récipient selon la revendication 17, caractérisé en ce qu'entre la paroi frontale (48) et la partie arrondie (40), est formée un espace creux accessible par le haut.

19. Récipient selon la revendication 18, caractérisé en ce que l'espace creux s'étend sur toute la largeur de la paroi frontale (48) du tiroir.

20. Récipient selon la revendication 18 ou 19, caractérisé en ce que l'espace creux est rigidifié par des pièces intercalaires (52) obtenues au moulage.

21. Récipient selon la revendication 17, caractérisé en ce que la paroi frontale (48) du tiroir et la partie arrondie (40) définissent en commun une section transversale en forme de "V" asymétrique.

22. Récipient selon la revendication 15, caractérisé en ce que sur le côté de la cavité de préhension opposé à celui situé du côté de la paroi frontale, est prévue une paroi (44) qui s'étend jusqu'à la partie de base du boîtier.

23. Récipient selon la revendication 22, caractérisé en ce que la cavité de préhension est délimitée latéralement par deux parois latérales (46), qui s'étendent de la paroi (44) en direction de la paroi frontale (48) du tiroir.

24. Récipient selon la revendication 15, caractérisé en ce que la cavité de préhension, sur son côté dirigé vers le côté supérieur du boîtier, comporte une paroi de dessus sensiblement plane, parallèle à la vitre d'observation (12) du récipient.

25. Récipient selon la revendication 24, dans lequel des nervures (54) sont formées par moulage sur le côté intérieur du boîtier, dirigé vers le tiroir, caractérisé en ce que le côté supérieur de la paroi de dessus s'adapte sous les nervures (54).

26. Récipient selon la revendication 24, caractérisé en ce que le tiroir comporte un serre-flan de pile (56) qui est disposé sur la paroi de dessus (42), de manière à pouvoir y coulisser dans la direction du déplacement du tiroir.

27. Récipient selon la revendication 26, caractérisé en ce que la paroi de dessus (42) comporte une rainure de guidage (60) destinée à des tenons (58) formés par moulage sur le serre-flan.

28. Récipient selon la revendication 27, caractérisé en ce que le serre-flan est précontraint par un ressort à branches dans une position de recouvrement d'une pile ayant été mise en place, et en ce que le ressort est monté, avec son enroulement, sur un des tenons (58), et s'appuie avec ses deux bras, sur un côté de butée formé par moulage sur la paroi de dessus (42).

29. Récipient selon la revendication 1, caractérisé en ce que le tiroir comporte des butées de pile (50) pour espacer la pile de la paroi frontale (48) du tiroir.

30. Récipient selon la revendication 29, caractérisé en ce que les butées de pile sont disposées au voisinage de longerons latéraux (32) du tiroir.

31. Récipient selon la revendication 29, caractérisé en ce que la cavité de préhension est disposée entre les butées de pile et la paroi frontale du tiroir.

32. Récipient selon la revendication 29, caractérisé en ce que la vitre d'observation (12) est entourée par des tronáons de surface du type passe-partout, de la coque supérieure (10), qui, lorsque le tiroir (22) est rentré, recouvrent l'espace entre les butées de pile et la paroi frontale du tiroir.

33. Récipient selon la revendication 32, caractérisé en ce que les butées de pile, lorsque le tiroir (22) est rentré, sont sensiblement congruentes au bord intérieur du passe-partout, parallèle à la paroi frontale du tiroir.

34. Récipient selon les revendications 23 et 30, caractérisé en ce qu'un espace libre est prévu entre les parois latérales (46) de la cavité de préhension (38) et les longerons latéraux (32) du tiroir (22).

35. Récipient selon la revendication 34, caractérisé en ce que l'espace libre est prévu sans interruption sur la totalité de la hauteur du tiroir.

36. Récipient selon la revendication 22, caractérisé en ce que la paroi (44) s'étend de manière inclinée vers le bas.

37. Récipient selon la revendication 1, caractérisé en ce qu'il comporte des moyens pour changer de manière cyclique, les couches de la pile.
